(19) Europäisches Patentamt
European Patent Office
Office européen des brevets

(11) **EP 4 455 745 A1**

(12) **EUROPEAN PATENT APPLICATION**

(43) Date of publication:
**30.10.2024   Bulletin 2024/44**

(51) International Patent Classification (IPC):
**G02B 6/02** *(2006.01)*        **G01D 5/353** *(2006.01)*
**G01L 1/24** *(2006.01)*        **G01L 11/02** *(2006.01)*
**G01K 11/00** *(2006.01)*

(21) Application number: **23315125.7**

(22) Date of filing: **27.04.2023**

(52) Cooperative Patent Classification (CPC):
**G02B 6/02042; G01L 1/242**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Centre National de la Recherche Scientifique**
  **75016 Paris (FR)**
• **Université de Franche-Comté**
  **25000 Besançon (FR)**

(72) Inventors:
• **Grosjean, Thierry**
  **25000 Besançon (FR)**
• **Eustache, Clément**
  **25000 Besançon (FR)**
• **Suarez, Miguel Angel**
  **25320 Chemaudin et Vaux (FR)**

(74) Representative: **Office Freylinger**
**P.O. Box 48**
**8001 Strassen (LU)**

(54) **OPTICAL SENSOR COMPRISING A MULTICORE OPTICAL FIBER**

(57)    An optical sensor (10) comprises a multicore optical fiber (12) having at least three cores (22, 24, 26) arranged within a cladding (14), longitudinally extending between a coupling end (9) and a transmitting end (8) of the optical fiber. The optical fiber (12) has at the coupling end (9) a fiber end-facet (18) on which a core coupler (16) is arranged. The core coupler (16) is formed by one or more layers of dielectric and/or metallic material, the layer(s) being deposited on the fiber end-facet (18) and being micro- and/or nanostructured to optically couple the cores (22, 24. 26) such that a mode of one of the three cores, referred to as first transmission core (22), is coupled to modes of two others of said cores, referred to as sample core (26) and reference core (24).

Also disclosed are homodyne and heterodyne interferometry systems comprising the optical sensor (10).

Figure 2

## Description

### Technical field

The present invention generally relates to optical fiber sensors, in particular to an optical sensor comprising a multicore optical fiber.

### Background of the Invention

The need for novel tools able to sense and analyze environmental parameters within tiny recesses is seen to rapidly grow in many scientific, medical and industrial domains. Being compact, robust and flexible, optical fibers are widely considered a promising optical tool for addressing this demand, as they allow a direct control on light encoded information collected from hard-to-reach locations.

The integration of micro or nano-optical structures, such as ring micro-resonators, photonic crystals, metasurfaces, onto fiber tips can further improve specific optical functionalities for imaging, analyzing, manipulating and controlling physical, chemical and biological quantities on a very local scale. In a broader perspective, Labs-on-fiber enable optical sensing and processing functionalities on the tip of optical fibers implemented in robust architectures, which can be particularly attractive for applications out of the labs.

In so-called extrinsic sensors, optical fibers are used solely to transfer measurement data from a sensing means, such as e.g. at the tip, to a processing unit. The sensing means may include any conventional non-fiber optical sensors or electronic sensors coupled to an optical transmitter. By using optical fibers, extrinsic sensors enable measurement data transfer from the sensing means to the processing unit with minimal noise corruption.

Meanwhile, intrinsic sensors directly implement optical fibers themselves as sensing means. Such optical fibers must be specifically configured so that propagation of light within the optical fiber is sensitive to predetermined quantities to be measured, e.g. temperature, strain, or pressure. A source of light is then typically arranged at one end of the optical fiber whilst a light receptor is arranged at its opposite end. More specifically, the source of light must be capable of introducing a beam of light in a core of the optical fiber. Measurements from the light receptor and their variation over time can then be processed to determine the conditions of propagation of the light within the fiber and the quantities to be measured. One example of intrinsic sensor is an optical fiber including Bragg gratings, respectively Fabry Perot cavities, in its core to enable temperature and strain measurements directly within it.

Unfortunately, current fiber-optic sensors usually require arranging macroscopic external devices at both ends of the optical fiber. Indeed, extrinsic sensors require a processing unit at one end and the sensing means at the other end, whilst intrinsic sensors usually require a source of light at one end and a light receptor at the other end. This severely restricts the range of application of such sensors, in particular . their use in environments with limited accessibility.

### Object of the invention

The object of the present invention is to provide an improved design of optical fiber sensor, which is versatile and has an enhanced sensitivity.

This object is achieved by the optical sensor according to claim 1.

### General Description of the Invention

The present invention provides an optical sensor comprising a multicore optical fiber with a cladding, wherein at least three cores are arranged within the cladding, longitudinally extending between a coupling end and a transmitting end of the optical fiber. The optical fiber has at the coupling end a fiber end-facet on which a core coupler is arranged.

According to the invention, the core coupler is formed by one or more layers of dielectric and/or metallic material. The layer(s) is/are deposited on the fiber end-facet and is/are micro- and/or nanostructured to optically interconnect the cores such that a mode of one of the three cores, referred to as first transmission core, is coupled to modes of two others of said cores, referred to as sample core and reference core. The core coupler, with its one or more layers, extends on the end-facet over the aforementioned at least three cores. Depending on the embodiments, the one or more layers can be deposited to cover the entire surface of the end-facet, and the spatial extent can be reduced by structuring the layers for the desired coupling operation.

The present invention thus provides an optical sensor based on a multicore optical fiber, wherein the cores are interconnected by means of the optical coupler which is integrated on the fiber tip. Specifically, the core coupler is built on the fiber end facet by any appropriate deposition method. The core coupler may be advantageously directly deposited and structured on the fiber end facet, i.e. manufactured directly (layer by layer) on the facet, *in situ.* Alternatively, or may fabricated on a separate substrate, from which it is transferred and deposited on said fiber end facet. As will be detailed below, it may comprise one or more layers, typically thin layers in the nanometer or micrometer range (for example between 5 nm and 20 $\mu$m), where the coupling function is achieved by micro- and/or nano-structuration of the one or more layers. This structuration (which implies a physical modification of one or more layers) is designed to couple a fiber mode from a core to the core coupler, and back to a fiber mode in another core.

The optical coupler is adapted to provide coupling of the transmission mode with each of the sample and reference modes, allowing operation in splitter or combiner modes, or both. In splitter mode, incident light traveling from the transmitting end via the transmission core is split by the optical coupler into the reference and sample cores. In combiner mode, light is introduced from the transmitting end via both sample and reference cores, and these modes are combined by the optical coupler into the transmission core.

With this design, the present invention may provide a portion of a Mach Zehnder interferometer integrated in a single length of multicore optical fiber. Remarkably, it should be noted that the transmission core as well as reference and sample cores run parallel to one another within the same optical fiber.

A first benefit of this configuration is a reduction in artefacts, since the reference and sample cores/fiber modes propagate through parallel paths within the same optical fiber. In particular, the reference and sample cores/beams are thus subjected to same temperature changes, hence compensating thermal artefacts.

Moreover, using interferometry instead of basic light intensity detection drastically increases the sensitivity of the measurements and enables determination of both the amplitude and the phase of the fiber modes.

Further advantages of the invention include compacity, high-sensitivity and the possibility for in-situ measurements. In particular, the shape and dimensions of the optical sensor are effectively that of its multicore fiber, i.e. extending longitudinally with a small cross-sectional area. The optical sensor can thus be used to probe environments with limited accessibility by inserting its coupling end through narrow gaps and/or crevices. Depending on the application, the length of the multicore fiber may range from a few centimeters to several meters.

Remarkably, the optical coupler does not have a sensing function and hence forms a compact and stable fiber mode coupler at the fiber tip. Depending on embodiments, the sensing function is provided by the fiber body itself, by an exposed portion of the fiber and/or by a predetermined sensing arrangement.

As used herein, the term multi-core optical fiber (MOF) designates an optical fiber comprising a plurality of optical cores that are arranged within a same cladding. The cores extend along the length axis of the optical fiber and act as separate waveguides such that light can independently propagate within the cores. The MOF preferably supports guided modes. The MOF may be made by any appropriate optical fiber manufacturing technology. In general, the cores and cladding are made from light transparent material (polymer, air, or, preferably, glass), the cladding having a different index of refraction than the cores (e.g. lower). Preferably, the spacing between the different cores is such that there is no optical coupling between the cores through the cladding(s). Depending on the application and number of cores, different lattice structures are possible. In embodiments, the lattice structure is such that one core is centrally positioned relative to the others, which are thus equidistant from the center core. In other embodiments, the cores may be arranged to form a regular polygon within the cladding, generally about the fiber axis. These are only examples and the skilled person will select a lattice configuration adapted for the particular application.

In embodiments, the cores may be straight or spun. Spun conventionally refers to the case where noncentral cores are twisted within the cladding, hence extending helically along the fiber length. Possibly, all cores may be spun/twisted. Spun-core optical fibers may be of advantage for limiting artefacts due to mechanical constraints and temperature changes. By contrast 'straight' refers to the case where the cores extend in a straight linear manner inside the cladding. Since in both cases the cores extend along the fiber axis and the inter-core distances do not change, one may say by abuse of language that the cores run 'parallel' to one another along the fiber axis.

Conventionally, the optical fiber may comprise a coating surrounding the cladding. Such coating may be of any appropriate form, depending on the application; it may e.g. comprise one or more layers, possibly with strengthening member(s), etc.

To sum up, in general the term MOF herein designates an optical fiber having a plurality of optical cores within a same cladding, as explained above; the cladding being preferably a single material having a given refractive index, in which all fibers are embedded. Typically, the cladding is a monobloc material of generally cylindrical shape (forming a 'matrix'). Depending on embodiments, the cladding can be manufactured to comprises at least two regions of different refractive index, hence where one or more cores are embedded in a first region with refractive index n1, and the other cores are embedded first region with refractive index n2. Depending on embodiments, the term MOF may also encompass optical fiber designs where cores are arranged in different claddings, in particular in claddings of different composition (namely different refractive index). In such case, the claddings are either attached together or arranged in a matrix material such that they are in intimate contact, or manufactured as a single body with regions of different refractive index, in particular to form a monobloc cladding unit where all cladding portions/regions are bound together.

As will be illustrated through the various embodiments below, the present optical sensor finds a multiplicity of sensing applications and can be used in a variety of configurations. In particular, the fiber modes (light beams) exiting the optical sensor at the transmitting end can be allowed to recombine spatially outside the fiber to interfere, or can be directly coupled to any apparatus or measuring system, or can be coupled to mono or multicore optical fibers to forward the modes/beams to an apparatus or measuring system.

In embodiments, a radial recess is formed in the cladding (and hence also in the coating, if any), such that at least one of the cores is partially exposed. The radial recess enables contact between chemical, physical or biological samples and the exposed core. When an exposed core enters in contact with a sample, properties of the light wave propagating therein, such as its wavelength, its polarization or its phase, shifts according to the quantity/concentration of the sample. In other words, the light wave propagating in the exposed core carry information about, e.g., the concentration of a given analyte in the sample, which can be determined using known methods. Phase shifts are namely detected by interferometry.

In embodiments, at least part of the recess, respectively the exposed core surface, is functionalized. For this purpose, a sensing arrangement may be provided on, at or in the vicinity of, the exposed surface, the sensing arrangement comprising a continuous and/or nanostructured plasmonic metal layer, plasmonic metallic nanoparticles, bioreceptors (binding sites or moieties) and/or other chemical elements. These are only example and any appropriate functionalization structure adapted may be used.

It may be noted that more than one such radial recess may be provided, either on the same core or on a different core, with same or different functionalization.

Optical sensors having a radial recess may employ a MOF with spun cores, thereby limiting the effect of mechanical artefacts, but can also employ a MOF with straight cores. MOF with straight cores may e.g. be employed in optical sensors to be used for sensing mechanical forces/strain applied to the optical fiber.

In embodiments, the optical sensor comprises a further multicore fiber, an end of which is connected to transmitting end of the first, multicore optical fiber such that their respective fiber modes are coupled. The further multicore optical fiber serves as a kind of extension fiber section, carrying the modes away from the first sensing section. The first and further multicore optical fibers may have straight or spun cores, same or different. That is, spun-straight, spun-spun or straight-straight configurations may exist. In embodiments, the sensing multicore optical fiber may have a length of several cm, whereas the extension section has a length of several dozen cm or several meters.

In embodiments, the (first) multicore optical fiber with radial recess has straight cores, whereas the further multicore optical fiber has spun cores. Such embodiment combines advantages of both straight and spun MOFs. Specifically, radial recesses are easily formed in straight MOFs, whilst spun MOFs limit mechanical and thermic artefacts.

Preferably, the first multicore fiber (i.e. the straight MOF) is kept straight by a holder to further reduce mechanical and thermic noise.

In embodiments, for optimum operation, at least one of the cores of the optical fiber is adapted to maintain light polarization.

Depending on the applications, the optical fibers may be designed for wavelength in the range of 400 to 1600 nm. For example, for mechanical sensing applications, the optical fiber may be designed for operation at wavelength in the range of 1310-1550 nm. For some biological or chemical applications, it may be desirable that the optical fiber is designed to operate at wavelengths in the visible range, e.g., in the range of 400 to 750 nm.

The optical coupler's function is to provide an optical connection between cores, in particular to enable deviating light travelling through one core from the transmitting end of the fiber into another core, though light will travel back to the transmitting end. The optical coupler does not have any sensing function *per se.* In particular the optical coupler is not designed to act as sensor.

The optical coupler is arranged on the fiber facet at the coupling end. Any appropriate technology can be used, which allows manufacturing the optical coupler directly on the fiber tip. For example, so-called bottom-up technologies can be employed (including e.g. sol-gel processing, SA, CVD, PVD, sputtering, evaporation, atomic layer deposition, 3D printing, and laser-induced photopolymerization). Top-down technologies may also be used (e.g. focused ion beam milling, plasma etching, photolithography, and electron-beam lithography).

It should be appreciated that these thin layer technologies imply a very small dimension of the core coupler, typically having a thickness/height of less than 10 $\mu$m.

The end facet preferably is a flat surface; it may be tilted or perpendicular to the fiber axis. Preferably the end facet is a cleaved end (i.e., flat and perpendicular to the fiber axis) but may also be a polished end.

In embodiments, the optical coupler is a multi-layered structure configured to couple the cores by enabling/sustaining/exciting propagation of electromagnetic surface waves in a plane parallel to surface of the end facet of the optical fiber. In such case the optical coupler is, as is known in the art, a layered structure, typically where each layer has a thickness of less than 1 $\mu$m, typically between 50 and 500 nm, or less.

Preferably, said waves include Bloch surface waves and/or surface plasmon polaritons and/or Tamm plasmons.

The layered structure may alternate low and high refractive index material layers. For example, the low refractive index materials may include dielectric materials with a refractive index $1.45 < n < 1.55$ (e.g. Al2O3 or SiO2). The high refractive index materials may include dielectric materials with a refractive index $1.6 < n < 2.5$ (e.g. TiO2 or Nb2O5).

In general, the optical coupler may have a dielectric multilayer structure, each layer having a thickness

$$t \leq \frac{\lambda}{2n}$$

t defined as , where $\lambda$ is the laser wavelength, and n is the refractive index of the material of the layer. The multilayer structure may be topped with a thin dielectric layer of high refractive index or a metal layer (gold or other metals).

In embodiments, the core coupler may be configured to support Bloch Surface Waves (BSWs) modes in a plane parallel to the cleaved or polished surface. BSWs are well-known surface electromagnetic modes capable of propagation distances on planar dielectric multilayers in the millimeter length scale. BSW propagate at the interface between two dielectric media, where at least one of them is a dielectric multilayer stack.

For example, the optical coupler may be formed by depositing a one-dimensional photonic crystal (PhC) on the cleaved or polished surface at the fiber's coupling end. The 1D PhC is a multilayered stack designed to sustain BSWs. BSWs are hence exploited as signal carriers and shown to provide controllable in-built coupling between the modes associated to two or more fiber cores.

The 1D-PhC includes a number of nano- or microscale optical elements, in particular diffractive structures, adapted to route the BSWs in the 1D PhC plane and to achieve the coupling with the fiber cores. The diffractive structures may comprise diffraction gratings, more preferably double cross-gratings and/or blazed gratings. This configuration is particularly robust, and has a low sensitivity to variations of temperature or mechanical constraints. Blazed gratings may consist of a periodic sequence of sawtooth grooves.

In embodiments, the optical coupler may be designed to sustain surface plasmon polaritons. In such case, the optical coupler includes a thin metallic layer, possibly on top of a dielectric multilayer, to form dielectric/metal interfaces where surface plasmon polaritons can be excited.

In embodiments, the optical coupler may be designed to sustain Tamm plasmons. In such cases, the optical coupler includes a metallic layer on top of a dielectric multilayer.

In another embodiment, the core coupler is configured to guide light by reflection and/or refraction.

The core coupler may comprise a glass monolith arranged on the cleaved or polished surface and defining guide channels interconnecting the cores, the guide channels having preferably a refractive index greater than that of the multicore optical fiber. This configuration is particularly robust, has a low sensitivity to noise due to variations of temperature or light polarization, and has high coupling efficiency.

The glass monolith may be a dielectric material with a refractive index preferably higher than that of the cores, although it may in embodiments be similar or lower. For example, the glass monolith may have a refractive index between 1.6 and 2. The glass monolith may be deposited as a single layer of $TiO_2$ or $Nb_2O_5$, typically with a thickness in the micrometer range Reflecting surfaces can be easily obtained by nano or microstructing the glass monolith layer.

In particular, the glass monolith is structured to define at least two dove-shaped prims, each configured to couple a respective pair of cores. The glass monolith may have a thickness/height comprised between 3 and 7 micrometers.

The optical sensor may comprise reflective means arranged at the transmitting end so as to reflect a mode of one, preferably two cores, in an opposite direction of propagation.

In embodiments, the optical fiber further comprises second and third transmission cores, the core coupler being further configured to couple the cores such that modes of the first and second cores are coupled to a mode of the reference core, and such that modes of the first and third cores are coupled to a mode of the sample core.

This configuration enables suppression of thermal noise and detection of very low variations of light intensity with a simple photodiode.

In embodiments, a sealing element is arranged at the coupling end to isolate the core coupler from an environment. Such sealing element provides physical protection of the core coupler, but may also prevent any interaction with the electromagnetic waves circulating in the coupler. The sealing element may e.g. be an isolating cap configured to surround the core coupler. Alternately, the sealing element can be an isolating layer encapsulating/covering the core coupler. The sealing element may be made from any appropriate material, e.g. polymer. The sealing element may be in direct contact with the top and lateral sides of the core coupler, in particular with the glass monolith. Alternatively, there may be a void or gap between the sealing element and the top layer of the core coupler to avoid any interaction with the micro- and/or nanostructured therein, as for the multi-layer core coupler.

According to another aspect, the invention further provides an interferometry system, comprising the optical sensor described above, a light source (preferably collimated or fibered) configured to introduce a light beam in at least one of the at least three cores from said transmitting end, and light monitoring means.

According to a still another aspect, the invention provides a heterodyne interferometry system, comprising the optical sensor described above, a light source (preferably collimated or fibered) configured to introduce light in three transmission cores of the multicore optical fiber towards the core coupler, and light monitoring means. The optical heterodyne detection system also comprises frequency shifting means. The frequency shifting means may e.g. be one, two or more acousto-optic modulators.

In embodiments, the systems described above further include a fan in/out system, an optical circulator, an acousto-optic modulator, and/or a microscope lens/objective. The collimated light source may include a laser and/or a broadband source. The light monitoring means may include a lock-in amplifier, a pair of photodiodes, a camera, and/or an optical spectrum analyzer.

Preferably, each layer of the core coupler has a thickness lower than an average wavelength of the light beam of the collimated light source divided by twice the index of refraction of the material of said layer.

## Brief Description of the Drawings

Further details and advantages of the present invention will be apparent from the following detailed description of not limiting embodiments with reference to the attached drawing, wherein:

Fig. 1a shows a schematic diagram of a conventional Mach-Zehnder homodyne interferometer;

Fig. 1b shows a schematic diagram of a conventional Michelson interferometer;

Fig. 2 shows a schematic representation of a homodyne interferometer using an embodiment of optical sensor according to the invention;

Fig. 3 shows a schematic representation of another homodyne interferometer using the optical sensor of Fig.2; .

Fig. 4 shows a schematic representation of yet another homodyne interferometer using an embodiment of the present optical sensor;

Fig. 5 shows a schematic representation of a heterodyne detection system using an embodiment of optical sensor according to the invention;

Fig. 6a shows a core coupler comprising means to generate Bloch Surface Waves;

Fig. 6b and c show different configurations for gratings of the core coupler of Fig.6a;

Fig. 6d shows a schematic representation of the vertical cross-section of the core coupler of Fig. 6a along plane X.

Fig. 7 shows a top view of an embodiment of the present optical sensor, wherein the core coupler is formed as a glass monolith.

Fig.8 shows a vertical cross-section of the core coupler of Fig.7 on the fiber end-facet,

Fig. 9: is a schematic representation of an embodiment of the optical sensor including a MOF extension.

## Description of Preferred Embodiments

Embodiments of the inventive optical sensor as well as corresponding detection system using embodiments of the inventive optical sensor. As will be seen, the invention can be used to implement homodyne and heterodyne interferometers of the Mach Zehnder or of the Michelson types.

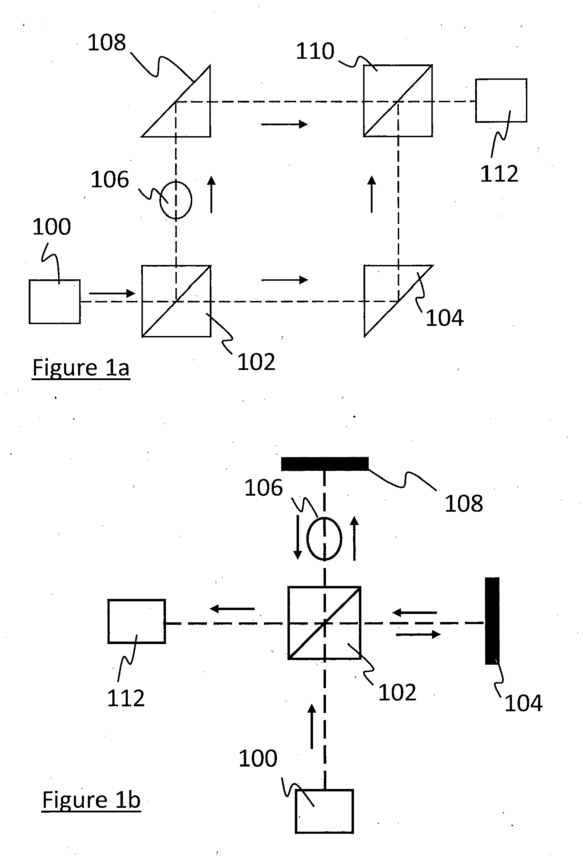

To recall the principles of interferometry detection, Figure 1a shows a schematic diagram of a traditional Mach-Zehnder homodyne interferometer, whilst figure 1b shows a schematic diagram of a traditional Michelson interferometer. As both interferometers are known and comprise similar components, only the configuration of the Mach Zehnder interferometer will be detailed below.

The traditional Mach-Zehnder homodyne interferometer comprises a light source 100, two beam splitters 102, 110, two mirrors 104, 108 and a detector 112. The light source 100 is configured to emit a collimated light beam, which is split by a first beam splitter 102, e.g. a semi-transparent mirror. Each resulting split beam propagates along a different path and is reflected by a mirror 104, 108 towards a second beam splitter 110 (used as a beam combiner). A sample 106 is arranged on the path of one of the split beams, causing the phase of said beam to be retarded as it traverses the sample 106. The beam traversing the sample 106 is generally referred to as the sample beam, whilst the other is referred to as the reference beam. The second beam splitter 110 adds the sample and the reference beams together, thereby forming an interference. The interference is observed by the detector 112 to obtain the relative phase shift between the sample and the reference beam. Information about the sample 106 traversed by the sample beam may be determined from the relative phase shift using a known processing unit. If the sample 106 is a mechanical strain, variations of the relative phase shift may give information about its magnitude and its rate of change. Alternatively, if the sample 106 is a chemical compound, the relative phase shift may give information about its quantity/concentration.

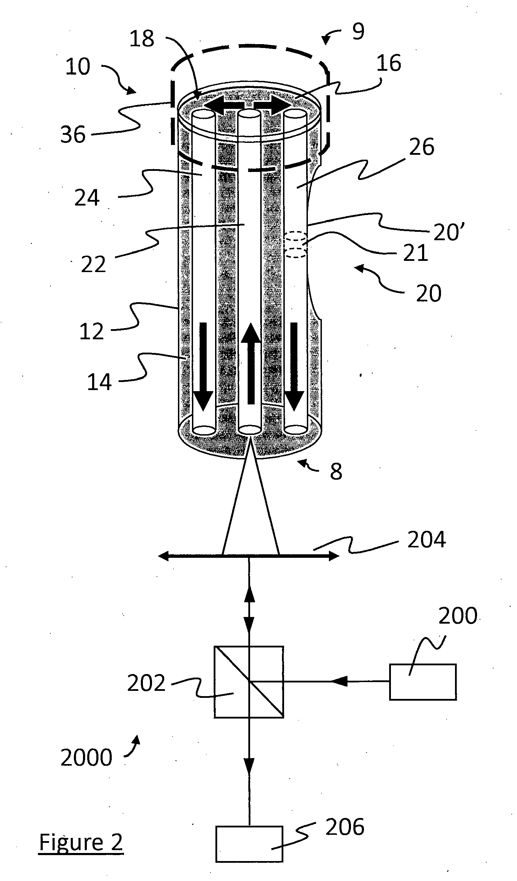

Figure 2 shows a schematic representation of an embodiment of homodyne interferometer using an embodiment of the present optical sensor 10 according to the present invention. This interferometer, generally indicated 2000, comprises a laser 200, a beam splitter 202, a camera 206, a microscope lens/objective 204, and the optical sensor 10. Interferometer 2000 is based on the Mach Zehnder interferometer; however, the outputs of the sample 26 and reference 24 cores are recombined spatially outside the fiber to interfere, in a manner similar to Young's slits.

The optical sensor 10 is built on a multicore optical fiber (MOF), comprising at least three cores. The optical fiber may comprise more cores than those required in the shown embodiments, in which case the additional cores are not used or can be employed for other purposes. In general, the multicore optical fiber may be of any appropriate type, having a plurality of cores within a same cladding. Preferably, the spacing between the different cores is such that there is no optical coupling between the cores through the cladding. Conventionally, the light waves/beams propagating within a core are referred as mode, and in particular fiber mode.

Turning back to the embodiment of Fig.2, the optical sensor 10 itself comprises a multicore optical fiber 12 having three straight (parallel) cores 22, 24, 26 arranged within a common cladding 14. The optical fiber 12 extends between two ends in the longitudinal direction, referred to as coupling end 9 and transmitting end 8. The optical sensor 10 is here configured to operate as part of a homodyne interferometer such that, in use, core 22 acts as transmission core carrying the incident fiber mode, whereas cores 24 and 26 act as reference and sample cores, respectively. The coupling end 9 has a cleaved or polished surface 18, on which a core coupler 16 is arranged.

In general, the core coupler 16 is configured to optically couple the cores 22, 24, 26. The core coupler 16 is an external element, in the sense that it is added at the fiber coupling end 9 by any appropriate deposition technique, i.e. it is built directly onto the fiber end-facet or it is reported/transferred onto the fiber end-facet. The core coupler 16 may thus be said to be integrated to the fiber end.

The core coupler 16 may be formed by one or more layers of metallic material and/or dielectric material. The layer(s) is/are deposited on the fiber end-facet and are micro- and/or nanostructured to optically couple the cores, and namely to operate as splitter and/or combiner.

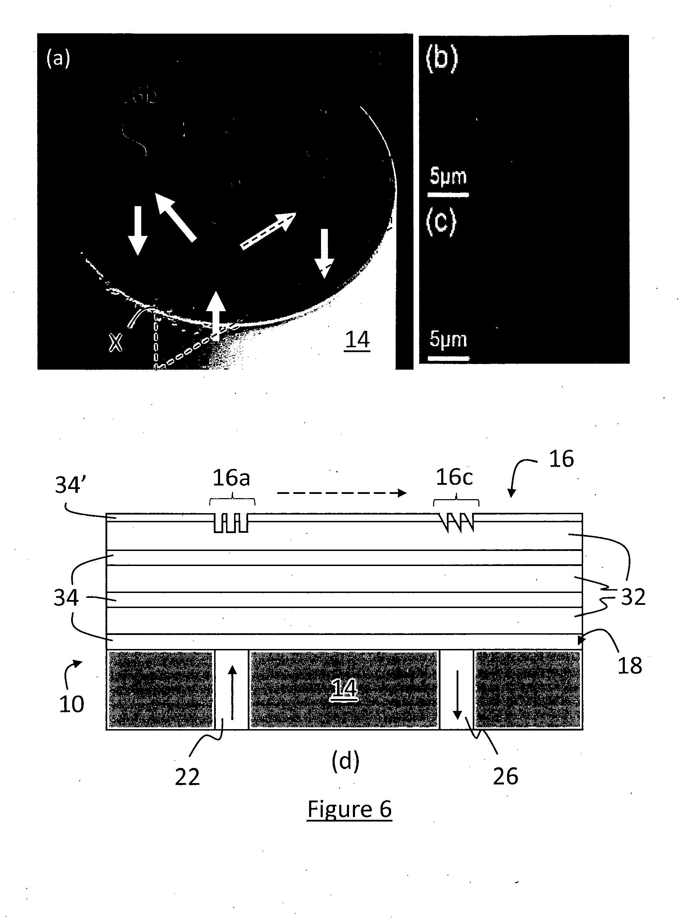

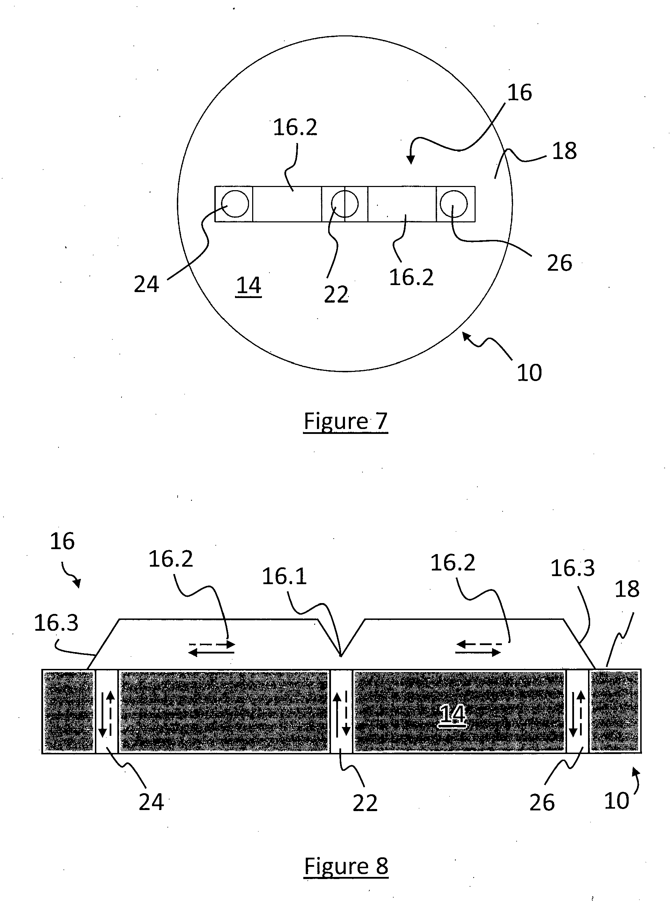

Possible configurations of core coupler 16 are shown on Figure 6 and 7 and are detailed in a following section.

The transmitting end 8 is the optical input/output side of the optical sensor 10. An incident light beam is emitted by the laser 200 via a beam splitter 202 and focused by a microscope lens/objective 204 to enter the transmission core 22 at the transmitting end 8, thereby propagating within the transmission core 22 as an incident fiber mode. The laser preferably is of the type 'longitudinally monomode' to be stable in phase; the coherence length is adapted to allow interferences between the sample and reference core (narrow spectral laser emission line). The incident fiber mode then propagates towards the coupling end 9 of the optical fiber 12. Upon reaching the core coupler 16, the incident fiber mode is split and redirected such that a second and a third fiber modes respectively propagate within the two other cores 24 and 26 towards the transmitting end 8. These second and third fiber modes thus form the reference and sample modes, which propagate in a direction opposite to the incident mode.

At the transmitting end 8 of the optical fiber 12, the reference and sample modes are allowed to combine in the free space to interfere, in a manner similar to Young's slits configuration. In the embodiment, the reference and sample modes hence exit the cores at the transmitting end; and the light beams are collected by lens/objective 204 and imaged with a camera 206. The camera may e.g. include a CMOS sensor in the visible range or an IR sensor (e.g. InGaAS for operation in the near IR including telecom wavelengths; around 900-1700 nm). The camera 206 is configured to observe the interference patterns resulting from the combination of the reference and sample modes. The camera signal is processed by a computer that is configured to analyze interference patterns by image processing, namely to detect pattern variations. The camera hence achieves a spatial reading of the optical interference patterns: a change in phase in interferometer results in a spatial shift of the interference fringes.

With this configuration, the microscope lens/objective 204, beam splitter 202, camera 206 and laser 200 may be arranged as a single end unit into which the optical fiber 12 may simply be plugged.

It shall be noted that the configuration described up to this point already constitutes a useful optical sensor and interferometer system. In particular, the optical sensor 10 formed by the optical fiber 12 with its optical coupler 16 is an intrinsic sensor. Such optical sensor can be used as opto-mechanical sensor, as mechanical forces applied to the optical fiber and tending to change its shape (e.g., bending, etc.) will modify the light travel through the optical fiber 12, leading to different interference patterns.

However, as shown in the embodiment of Fig.2, the cladding 14 of the optical fiber may form a recess 20, of which the dimensions are such that the sample core 26 has an exposed portion 20'. That is the transmission 22 and reference 24 cores covered by the cladding 14 along the entire length of the optical fiber 12, whilst the sample core 26 has an exposed portion 20'. This exposed portion 20' allows interfacing the sensing/sample core 26 with another medium. The exposed portion 20' can be used as such, without modification. However, the exposed portion 20' can be advantageously functionalized using any appropriate technique. Typically, this involves providing a sensing arrangement extending at least partially over exposed portion 20' of the core, which is designed as a functionalized structure; it may e.g. comprise a continuous and/or nanostructured plasmonic metal layer, plasmonic metallic nanoparticles, bioreceptors and/or other chemical elements.

In such case, the exposed portion 20' will be in contact with a fluid (liquid or gas), one or more properties of which may change in function of the involved physical/chemical/biological reaction. This will perturb the propagation of the sample mode, and can thus be detected, typically based on phase shift. As previously explained, this interference pattern can be processed with a processing unit to obtain information about the analyte (chemical or biochemical compound or moiety), in particular its quantity / concentration or pressure.

As will be understood by those skilled in the art, sensitivity to the refractive index variation, arising from the strong interaction between the guided mode in the sample core 26 and an analyte in the fluid, will allow for chemical and biochemical analysis of solutions with small volume and low concentration.

The recess 20 may be obtained by ablation of the cladding from the lateral side, e.g. using laser ablation ($CO_2$, fs, etc.), chemical etching, laser illumination combined with chemical etching, mechanical abrasion. The cladding is removed down to the level of the lateral guiding face of the respective core or the region of the evanescence of the guided mode. The recess may be formed at any suitable point along the length of the optical fiber 12.

In general, in all embodiments, any appropriate functionalization technique can be used to functionalize at least part of the exposed portion 20', thereby providing a sensing arrangement. Possible sensing arrangement include the following structures, which may be combined:

- a coating with a thin layer of continuous or nanostructured plasmonic metal (plasmonic sensor or SPR; layer of gold, silver, aluminum, or other appropriate metals or alloys);

- a coating with plasmonic metal nanoparticles (localized plasmonic SPR sensors)

- functionalization by a layer of bioreceptors allowing the selective attachment of biological molecules or moieties, (biosensors);

- functionalization by one or more layer(s) of different types of materials: metals, metal oxides, and compounds, graphene, graphene oxides and compounds, molecules or chemical elements, etc., (gas sensors, chemical sensors and ionic species, organic vapors or other, etc.).

In the embodiments of figure 2, the recess 20 is formed such that it simply uncovers a length/portion of the sample core 26 (i.e., the sample core 26 is not modified).

In other embodiments, the recess 20 can be realized in such way that it also extends partially or entirely into the sample core 26. For example, the sample core may be interrupted transversally to the axis of elongation of the MOF. This is illustrated by the transversal groove 21 in dashed-lines in Fig.2. In such case it is desirable that the cladding is also removed down to the radial depth of the groove, to facilitate fluid flow through this groove/interruption. The functionalization may also extend inside groove 21.

In embodiments, one or more further recess similar to recess 20 may be formed on the same core or an alternate core. Functionalization may be same or different.

In embodiments, a sealing element 36 may be arranged at the coupling end 9 to isolate the core coupler 16 from an environment. Such sealing element may take the form of an isolating cap 36 configured to surround the core coupler 16, represented in dashed lines in Fig. 2. The sealing element may be made from any appropriate material, e.g., polymer.

The use of a spun MOF may be desirable to reduce mechanical artefacts. However, due to the helical shape of the cores, it may be more complex to ablate and functionalize the recess, compared to a straight-core MOF.

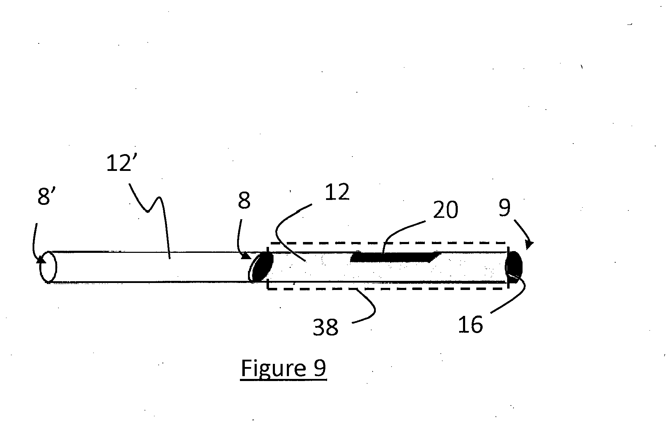

In embodiments, as shown on figure 9, the optical sensor 10 comprises a plurality of multicore optical fibers with different core geometries (i.e. straight resp. spun). The recess 20 is formed peripherally in a length of MOF -similar to Fig.2- with straight-core MOF 12 having the core coupler 16 at one of its end facets, i.e. at the coupling end 9. This length of MOF 12 is advantageously short, e.g. a few centimeters long and/or kept straight by a holder 38 (e.g. side opened ferule) to prevent noise caused by deformation of the cores. This length of MOF with straight cores 12 is optically connected at its transmitting end 8 to a comparatively longer length of MOF with spun cores 12', which may be referred to as extension MOF. The extension MOF with spun cores 12' is configured to guide fiber modes between the sensor MOF with straight cores 12 and the rest of the interferometry system arranged at the opposite end 8' (thereby forming a two-way communication channel), while limiting mechanical and temperature artefacts.

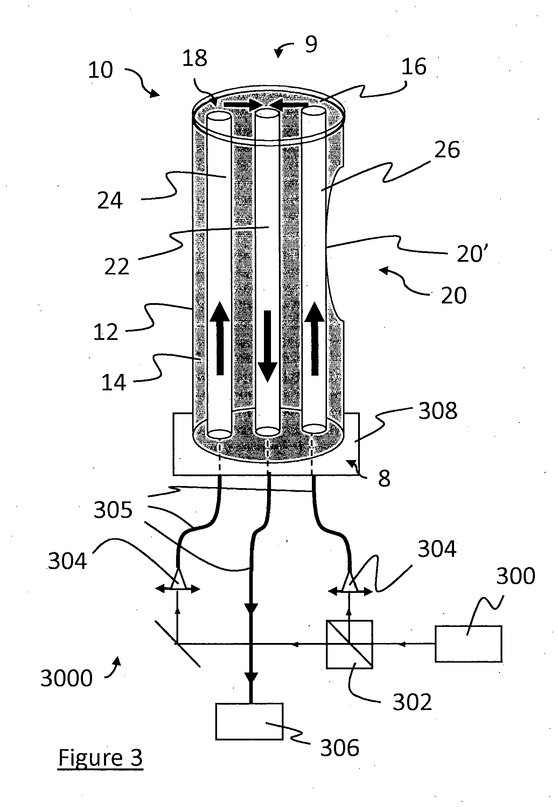

Figure 3 shows an alternate embodiment of interferometer according to the invention. This interferometer, generally indicated 3000, comprises a broadband optical source 300, a beam splitter 302, an optical spectrum analyzer 306, two microscope lenses/objectives 304, three single core optical fibers 305, a fan in/out system 308 which couples three single-core fibers 305 to the individual cores 22, 24, 26 of a multicore optical fiber 12, and the optical sensor 10 of figure 2. The single core optical fibers 305 may or may not be integrated with the fan in/out system 308. The optical sensor is of similar design as that of Fig.2, and it is only the input/output arrangement that differs.

In this embodiment, an incident light beam is emitted by the broadband optical source 300 and split by the beam splitter 302 into a sample beam and a reference beam. The sample and reference beams respectively enter a sample and a reference core of the optical sensor at the transmitting end 8 by means of the microscope lenses/objectives 304, and two single core optical fibers 305 of the fan in/out system 308. The resulting sample and reference modes then propagate towards the coupling end 9 of the optical fiber 12. As previously detailed, the sample core 26 has an exposed portion 20 which allows interfacing of the sample core 22 with another medium. Upon reaching the coupling end 9, the sample and reference modes are combined and redirected by the core coupler 16 such that a transmission mode propagates within the transmission core 22 towards the transmitting end 8 and the Optical Spectrum Analyzer 306, via the fan in/out system 308 and one of its single-core fiber 305. The Optical Spectrum Analyzer 306 is a known device capable of performing spectral analysis by measuring the distribution of power of a polychromatic light from an optical source (here the broadband source 300) over a specified wavelength range. Here the core coupler 16 operates as combiner, but can have the same design as a coupler operating as splitter (in Fig.2), based on the principle of reciprocity of light.

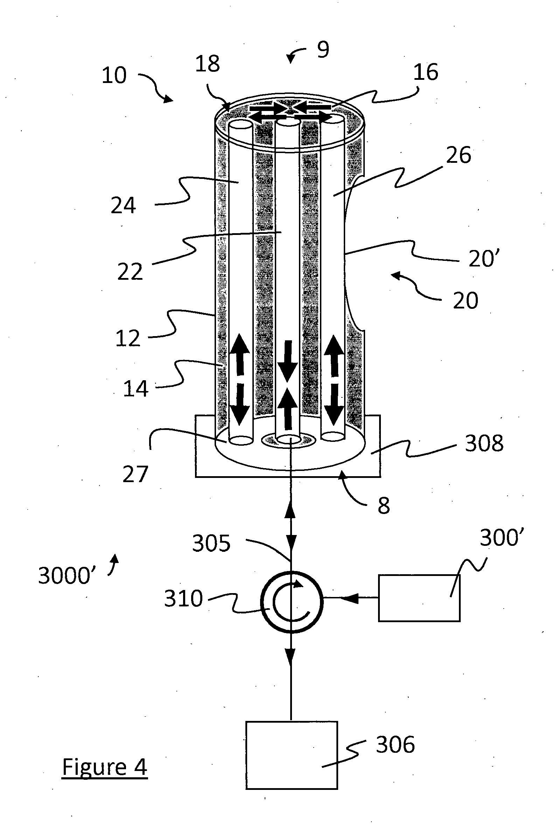

Figure 4 shows an alternate embodiment of the interferometer according to the invention, which here forms a fiber-integrated Michelson interferometer. This interferometer, generally indicated 3000', comprises a fibered light source 300', an optical circulator 310, an optical spectrum analyzer 306, a single core optical fiber 305, a fan in/out system 308, and a three-core optical sensor 10. The optical sensor 10 is similar to that of Figs.2 and 3, but here further includes reflective means 27 in the form of a flat gold ring arranged to cover the sample 26 and reference 24 cores at the transmitting end 8 and configured to reflect the sample and reference modes in an opposite direction of propagation. The core coupler 16 thus operates both as splitter and combiner.

In this embodiment, an incident light beam is emitted by the fibered light source 300' and redirected into the transmission core 22 at the transmitting end 8 by the optical circulator 310, single core optical fiber 305 of the fan/in out system 308. The resulting incident fiber mode then propagates towards the coupling end 9 of the optical fiber 12. Upon reaching the core coupler 16, the incident fiber mode is split and redirected such that a reference and a sample fiber mode respectively propagate within the reference 24 and sample 26 cores back towards the transmitting end 8. Then, upon reaching the transmitting end 8, the reference and a sample fiber modes are reflected by the reflective means 27 in an opposite direction of propagation, i.e. back towards the coupling end 9. As previously detailed, the sample core 26 has an exposed portion 20' which allows interfacing of the sample core 26 with another medium. Upon reaching the coupling end 9, the sample and reference modes are combined and redirected by the core coupler 16 such that a transmission mode propagates within the transmission core 22 towards the transmitting end 8 and the Optical Spectrum Analyzer 306 via the fan in/out system 308.

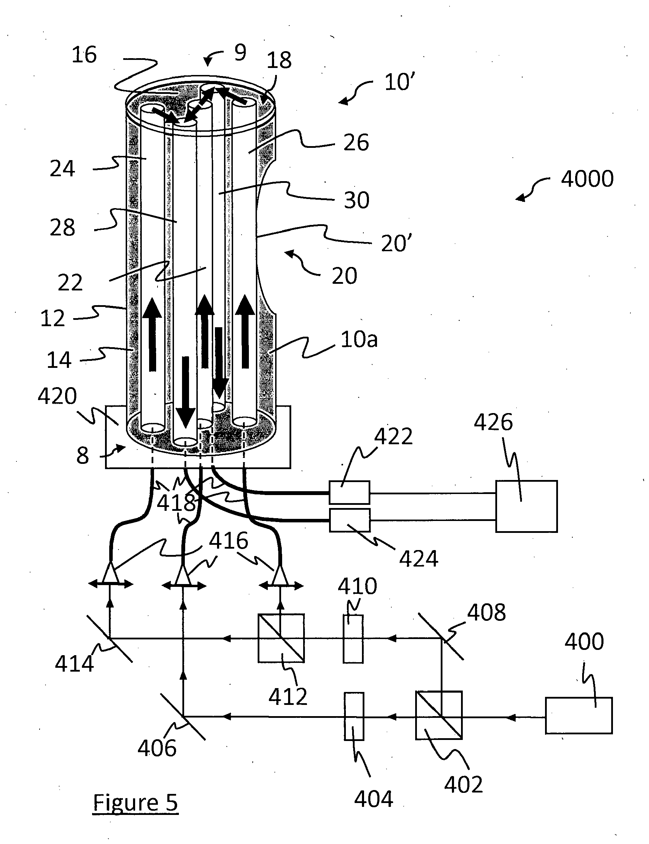

Figure 5 shows a schematic representation of a heterodyne detection system 4000 using another embodiment of the optical sensor according to the invention. This heterodyne detection system comprises a laser 400, two beam splitters 402, 412, two acousto-optic modulators 404, 410, three microscope lenses/objectives 416, a plurality of mirrors 406, 408, 414, five single-core fibers 418, a fan in/out system 420 to couple the single-core fibers to individual cores of a multicore optical fiber, two photodiodes 422, 424, a synchronous detector/lock-in amplifier 426 and the optical sensor 10'.

The optical sensor 10' itself comprises an optical fiber 12 having five parallel cores 22, 24, 26, 28, 30 arranged within a common cladding 14. The overall fiber structure is the same as for the embodiment of Fig.3, but here two more cores extend along the fiber length from the transmitting end 8 to the coupling end 9, the latter having a cleaved or polished end-facet on which an optical coupler 16' is arranged.

In this embodiment the optical sensor 10' is designed to operate as heterodyne detection system, wherein, in use, three cores 22, 24, 26 act as transmission cores to convey incident fiber modes from the transmitting end 8 to the coupler 16, one core acts as reference core 28 and one core acts as sample core 30.

The optical coupler 16' is configured to distribute light from a first transmission core 22 into the reference 28 and sample cores 30; to connect the second transmission core 24 with the reference core 28; and to connect the third transmission core 26 with the sample core 30.

An incident light beam is emitted by the laser 400 and is split by a first beam splitter 402 into a first beam and a second beam. The frequency of the first and/or second beam is shifted by means of an acousto-optic modulator 404, 410. The second beam is then split by a second beam splitter 412 into a third and a fourth beam.

The first, third and fourth beams are each focused by a microscope lens/objective 416 to respectively enter an end of a first, second and third single core optical fiber 418 of the fan in/out system 420. The fan in/out system 420 is configured to respectively introduce the resulting modes from the first, second and third single core optical fibers 418 into the first 22, second 24 and third transmission cores 26 of the multicore optical fiber 12 at its transmitting end 8.

The resulting first, second and third fiber mode (incident modes) then propagate within their respective core towards the coupling end 9 of the optical fiber 12. The first 22 and second core 24 are covered by the cladding 14 along the entire length of the optical fiber 12, whilst the third core 26 may have an exposed portion 20'. Chemical compounds present on the exposed portion 20' of the third core 26 thus perturb the propagation of the third mode, causing its phase to shift.

Upon reaching the core coupler 16, the first fiber mode is thus split and redirected to form a reference and a sample fiber modes respectively propagating in reference core 28 and sample core 30 towards optical transmitting end 8, i.e. back towards the fan in/out system 420. Likewise, upon reaching the core coupler 16, the second and third (incident) fiber modes are respectively redirected to the reference core 28 and sample core 30 and added to the reference and sample fiber modes.

Upon reaching the fan in/out system 420, the reference and sample modes are respectively introduced in a reference and sample single core 418 optical fiber. A reference photodiode 424 and a sample photodiode 422 are arranged at the transmitting end of the reference and sample single core optical fiber 418 and are configured to monitor the intensity of the reference and sample fiber modes, respectively. The measured intensities are then transmitted to a lock-in amplifier 426, which can determine the amplitude and relative phase shift of the sample mode (regarding the reference mode), at the beating frequency of the reference mode, using methods known in the art, e.g. by multiplying the signals from the photodiodes 422, 424 and integrating the resulting product signal over specified time steps. As previously detailed, this relative phase shift can be processed to obtain information about e.g. the concentration of a given analyte in the sample.

Each of the two photodiodes 422, 424 outputs an electrical signal with an amplitude sinusoidally modulated at a frequency of a few kHz defined by the acousto-optic modulators 404 and 410 (since the photodiodes temporally detect optical interference or beat signals at a corresponding frequency). The output of the reference photodiode 424 measuring the intensity of the reference mode is passed as "reference signal" to the lock-in amplifier 426. Likewise, the output of the sample photodiode 422 measuring the intensity of the sample mode is passed as "input signal" to the lock-in amplifier 426. The lock-in amplifier 426 then provides the amplitude of the input signal and the phase difference between the input signal and the reference signal over time. This measurement of the phase shift caused by the variation of monitored media may then be used to obtain information about the sample as previously detailed.

For the sake of exemplification, two possible configurations of the optical coupler 16 will be described on the basis of Figs 6 and 7-8, which can be realized using known technologies.

Figure 6 relates to a possible embodiment for the core coupler 16 comprising a one-dimensional photonic crystal 16 configured to generate and sustain Bloch Surface Waves along the cleaved or polished surface 18 of the optical fiber 12. Such a one-dimensional photonic crystal (1DPhC) may be formed using conventional techniques by alternatively stackings layers of low and high refractive index dielectric material directly onto the cleaved or polished surface 18. For example, layers of Niobium Pentoxide and Silica may be alternatively stacked using plasma assisted electron beam deposition, or another PVD technique. Each layer typically has a thickness of less than 1 $\mu$m.

Fig. 6d shows a schematic representation of the cross-section through the 1DPhC on the fiber end-facet. A plurality of layers of dielectric material having low refractive index 32 and high refractive index 34, 34' are deposited alternatively to form a stack onto the cleaved or polished surface 18. The final layer, i.e. the topmost one, denoted 34', is significantly thinner than other layers of the same material 34, thereby keeping BSW confined on said layer. In embodiments the 1DPhC comprises 13 layers, i.e. 6 pairs of layers with low 32 and high 34 refractive index and a final layer 34'.

Diffraction gratings 16a, 16b, 16c are formed on top of the one-dimensional photonic crystal 16 at fiber cores 22, 24, 26. Each diffraction grating is configured to couple its associated fiber core/ guided mode to Bloch Surface Waves, or inversely.

When a guided mode is transmitted to the one-dimensional photonic crystal 16 by the core 22 associated to diffraction grating 16a, Bloch Surface Waves are excited and propagate in the one-dimensional photonic crystal parallel to the cleaved or polished end. It may be noted that in this embodiment the operation mode corresponds to that of Fig.2. The diffraction grating 16a is associated with transmission core to act as splitter, such as to couple the mode from the transmission core into BSW directed toward the two other diffraction gratings 16b, 16c associated with the sample and reference cores respectively.

The configuration of the diffraction gratings will be adapted by those skilled in the art to achieve the desired coupling between the BSW and the modes. In the embodiment, diffraction grating 16a (shown in Fig.6b) is designed as a double cross-grating, to enable coupling in two orthogonal directions within the plane. Fig. 6c shows a blazed grating corresponding to the design of diffraction gratings 16b and 16c. As it can be seen on figure 6a, the strips of the diffraction gratings 16b and 16c are perpendicular to the direction of propagation of the wave. This configuration of one-dimensional photonic crystal 16 and diffraction grating 16a-c effectively acts as a polarization-sensitive beam splitter which uses Bloch Surface Waves as signal carriers, thereby providing a controllable in-built coupling between the optical fiber cores 22, 24, 26.

The gratings 16a, 16b, 16c are microstructures routing the Bloch Surface Waves on the one-dimensional photonic crystal and functioning in pair to couple the different fiber modes of the MOF. In particular, unidirectional coupling for BSWs is ensured by blazed gratings 16b, 16c, whilst double cross gratings 16a can launch or receive Bloch Surface Waves in two directions, e.g. two orthogonal directions (as in the embodiment of figure 6a-d) or two opposite directions. The double cross grating 16a thus acts as a beam splitter/combiner.

As an exemplary, non-limitative embodiment, for an operation at 1.55 $\mu$m wavelength, each groove of the gratings extends for 370-nm in height and 920-nm in length, with a period of 1.47 $\mu$m. The projection of diffraction gratings onto plane X may define a periodic sequence of grooves as shown on Fig.6d, which may be rectangular, as is the case for the double cross gratings 16a, or sawtooth shaped, as is the case for the blazed gratings 16c. The one-dimensional photonic crystal 16 is formed by alternatively stacking layers of Niobium Pentoxide 34 and Silica 32 respectively having refractive indices of 2.186 and 1.469, and thicknesses of 240 nm and 345 nm. Additionally, the one-dimensional photonic crystal 16 is covered with a thin 75 hm-thick layer of Niobium Pentoxide 34'.

An alternative configuration for the core coupler 16 is shown on Figures 7 and 8. The core coupler 16 is here formed as a glass monolith 16 arranged on the cleaved or polished surface 18 of the optical fiber so as to cover the ends of the transmission 22, reference 24 and sample 26 cores.

The glass monolith 16 preferably has a refractive index greater than that of the cores, e.g. greater than 1.5. The glass monolith 16 has a generally trapezoidal prismatic shape and is structured to form two light guiding channels 16.2 of same length extending on both sides of the transmission core 22. More specifically, a central notch 16.1 is formed to coincide with the transmission core 22, hence dividing its guided mode into two portions that travel in guiding channels 16.2 parallel to the cleaved or polished surface 18. The notch hence 16.1 may act as a beam splitter to the incident mode and redirects the split beams in the guiding channels 16.2. At its extremities, the monolith has beveled surfaces 16.3, that are configured to couple the guiding channels 16.2 with the reference 24 and sample 26 cores, respectively.

The glass monolith 16 here has a double dove shape, which allows operation as optical splitter and coupler. The splitting is shown by the solid arrows: the fiber mode in the transmission core 22 is split into two by the central notch 16.1, each guided beam being then reflected by the beveled surface 16.3 into the sample 26 and reference 24 cores, respectively.

This configuration of coupler 16 of course also allows operation as combiner, as indicated by the dashed-arrows.

Advantageously, the glass monolith 16 is a monolithic glass slide having a trapezoidal vertical cross-section, as shown on figure 8, and a rectangular horizontal cross-section, as shown on figure 7. Due to the notch 16.1, the two guiding channels 16.2 have same trapezoidal shape. The glass monolith 16 may have a height of few micrometers, e.g. between 3 and $7 \mu m$.

The glass monolith 16 may be formed by depositing a monolithic glass film over the end facet, e.g. of $TiO_2$ or $Nb_2O_5$, with a thickness of e.g. 3 to 7 $\mu m$. The film is then structured by Focused Ion Beam milling, laser milling, lithography, chemical attack, etc., e.g. to provide the prismatic shape, the central notch and beveled end faces.

During the development of the invention, commercial telecom-type multicore optical fibers have been used, designed for operation in the near-IR at about 1550 nm. In particular, 4-core and 7-core optical fibers of the SM-4C1500(8.0/125) and SM-7C1500(6.1/125) series, respectively, from Fibercore have been used. This is only an example. The invention could also be used with MOF operating at other wavelengths, e.g. in the visible range or other.

**Claims**

1. An optical sensor (10) comprising:

    a multicore optical fiber (12) having at least three cores (22, 24, 26) arranged within a cladding (14), longitudinally extending between a coupling end (9) and a transmitting end (8) of the optical fiber;
    wherein said optical fiber (12) has at said coupling end (9) a fiber end-facet (18) on which a core coupler (16) is arranged;
    **characterized in that** the core coupler (16) is formed by one or more layers of dielectric and/or metallic material, the layer(s) being deposited on the fiber end-facet (18) and being micro- and/or nanostructured to optically couple the cores (22. 24. 26) such that a mode of one of the three cores, referred to as first transmission core (22), is coupled to modes of two others of said cores, referred to as sample core (26) and reference core (24).

2. The optical sensor (10) according to claim 1, wherein a recess (20) is formed peripherally in the cladding (14) such that a surface (20') of the sample core (26) is exposed; and
    preferably wherein the recess (20) extends at least partially inside the sample core (26).

3. The optical sensor (10) according to claim 2, wherein a sensing arrangement is provided on, at or in the vicinity of, the exposed surface (20'), wherein the sensing arrangement comprises a continuous and/or nanostructured plasmonic metal layer, plasmonic metallic nanoparticles, bioreceptors and/or other chemical elements.

4. The optical sensor (10) according to claim 2 or 3, comprising a further multicore optical fiber (12') wherein

    the multicore optical fiber (12) has straight cores and at least one recess formed peripherally in the cladding of the multicore fiber optical fiber (12);
    the further multicore optical fiber has spun core, the multicore optical fiber (12) is connected at its transmitting end to the further multicore optical fiber (12') such that their fiber modes are coupled;
    preferably wherein the first multicore fiber is kept straight by a holder (38).

5. The optical sensor (10) according to any of the preceding claims, wherein the core coupler (16) has a thickness in the micrometer range, preferably of less than 10 $\mu m$.

6. The optical sensor (10) according to any of the preceding claims, wherein the cores (22, 24, 26, 28, 30) are spun.

7. The optical sensor (10) according to any of the preceding claims, wherein the core coupler (16) is as a multi-layered structure configured to sustain or excite electromagnetic surface waves in a plane parallel to the end-facet (18);
preferably wherein said waves include Bloch surface waves and/or surface plasmon polaritons and/or Tamm plasmons.

8. The optical sensor (10) according to any of the preceding claims, wherein the core coupler (16) is formed by alternatively stacking layers of different refractive index, so as to form a one-dimensional photonic crystal (16);
preferably wherein each layer of one-dimensional photonic crystal (16) has a thickness lower than 1 μm).

9. The optical sensor (10) according to claim 8, wherein at least one layer is micro- and/or nanostructured so as to form diffractive and/or resonant structures at the cores;
preferably wherein said structures are diffraction gratings (16a, 16b, 16c), metasurfaces, metamaterials, photonic crystals, and/or nano-antennas, more preferably wherein the diffraction gratings (16a, 16b, 16c) are regular symmetric gratings, blazed gratings (16b, 16c) and/or double cross-gratings (16a).

10. The optical sensor (10) according to any of claims 1 to 6, wherein the core coupler (16) is configured to guide light by reflection and/or refraction.

11. The optical sensor (10) according to claim 10, wherein said core coupler (16) is formed as a glass monolith on the fiber end-facet (18), the glass monolith defining guide channels (16.2) interconnecting the cores; and preferably

    wherein the glass monolith is structured to define at least two dove-shaped prisms, each configured to couple a respective pair of cores; and/or
    said glass monolith has a height comprised between 3 and 7 micrometers.

12. The optical sensor (10) according to any of the preceding claims, further comprising reflective means (27) arranged at the transmitting end (8) so as to reflect a mode of one, preferably two cores, in an opposite direction of propagation.

13. The optical sensor (10) according to any of the preceding claims, wherein the optical fiber (12) further comprises second and third transmission cores and wherein the core coupler is further configured to couple the cores such that modes of the first (22) and second (24) transmission cores are coupled to a mode of the reference core (28), and such that modes of the first (22) and third (26) transmission cores are coupled to a mode of the sample core (30).

14. The optical sensor (10) according to any of the preceding claims, wherein a sealing element (36) is arranged at the coupling end (9) to isolate the core coupler (16) from an environment;
preferably wherein the sealing element is an isolating cap configured to surround the core coupler (16).

15. Interferometry system (2000, 3000, 3000') comprising:

    an optical sensor (10) according to any of the preceding claims,
    a light source (200, 300, 300') configured to introduce a light beam in at least one of the at least three cores, and
    light monitoring means (206, 306).

16. Heterodyne interferometry system (4000) comprising

    an optical sensor (10) according to any of claims 13 or 14,
    a light source (400) configured to introduce light beams in the three transmission cores (22, 24, 26) of the optical sensor (10),
    frequency shifting means (404, 410), and
    light monitoring means (422, 424, 426).

17. Interferometry system according to any of claims 14 or 15, wherein each layer of the core coupler 16 has a thickness lower than an average wavelength of the light beam of the collimated light source (200, 300, 400) divided by twice the index of refraction of the material of said layer.

108    110

106

100

112

104

Figure 1a    102

106    108

112

102

104

100

Figure 1b

Figure 2

Figure 3

Figure 4

Figure 5

Figure 6

Figure 7

Figure 8

Figure 9

## EUROPEAN SEARCH REPORT

Europäisches
Patentamt
European
Patent Office
Office européen
des brevets

**Application Number**

EP 23 31 5125

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 839 080 A (UNIV GUILIN ELECTRONIC TECH) 4 June 2019 (2019-06-04) <br> * paragraph [0010] - paragraph [0011] * <br> * paragraph [0014] * <br> * paragraph [0021] * <br> * paragraph [0029] * <br> * paragraph [0036]; figures 1, 5 * | 1-17 | INV. <br> G02B6/02 <br> G01D5/353 <br> G01L1/24 <br> G01L11/02 <br> G01K11/00 |
| A | CN 105 954 235 A (UNIV HARBIN ENG) 21 September 2016 (2016-09-21) <br> * paragraph [0007] * <br> * paragraph [0019] - paragraph [0021] * <br> * paragraph [0032] - paragraph [0033] * <br> * paragraph [0035] - paragraph [0037]; figures 1-5 * | 1-17 | |
| A | BUDINSKI VEDRAN ET AL: "A Miniature Fabry Perot Sensor for Twist/Rotation, Strain and Temperature Measurements Based on a Four-Core Fiber", SENSORS, vol. 19, no. 7, 1 April 2019 (2019-04-01), page 1574, XP093094883, CH ISSN: 1424-8220, DOI: 10.3390/s19071574 Retrieved from the Internet: URL:https://www.mdpi.com/journal/sensors/> [retrieved on 2023-10-25] <br> * 2.1 Sensor design and fabrication * <br> * 2.2 Sensor operation * <br> * figures 1-3 * | 1-17 | |

TECHNICAL FIELDS
SEARCHED (IPC)

G02B
G01L
G01D
G01W
G01K

-/--

The present search report has been drawn up for all claims

| Place of search | Date of completion of the search | Examiner |
|---|---|---|
| The Hague | 25 October 2023 | Mouget, Mathilde |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAO YUCHENG ET AL: "Advances in Multicore Fiber Interferometric Sensors", SENSORS, [Online] vol. 23, no. 7, 24 March 2023 (2023-03-24) , page 3436, XP093094870, CH ISSN: 1424-8220, DOI: 10.3390/s23073436 Retrieved from the Internet: URL:https://www.mdpi.com/journal/sensors/> [retrieved on 2023-10-25] * the whole document * ----- | 1-17 | |

TECHNICAL FIELDS
SEARCHED      (IPC)

The present search report has been drawn up for all claims

| Place of search | Date of completion of the search | Examiner |
|---|---|---|
| The Hague | 25 October 2023 | Mouget, Mathilde |

EPO FORM 1503 03.82 (P04C01)

## ANNEX TO THE EUROPEAN SEARCH REPORT
## ON EUROPEAN PATENT APPLICATION NO.

EP 23 31 5125

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | Publication date | Patent family member(s) | Publication date |
|---|---|---|---|
| CN 109839080 A | 04-06-2019 | NONE | |
| CN 105954235 A | 21-09-2016 | NONE | |

EPO FORM P0459

For more details about this annex : see Official Journal of the European Patent Office, No. 12/82